# EUROPÄISCHE PATENTSCHRIFT

(11) **EP 3 935 272 B1**
(45) Veröffentlichungstag und Bekanntmachung des Hinweises auf die Patenterteilung: **26.06.2024**
(21) Anmeldenummer: 19710581.0
(22) Anmeldetag: 04.03.2019
(51) Int. Cl.: F02D 41/14, F02D 41/00, F02D 37/02, F02D 29/06, F02D 41/34, F02P 5/15

(54) **BRENNKRAFTMASCHINE UND VERFAHREN ZUM BETREIBEN EINER BRENNKRAFTMASCHINE**
INTERNAL COMBUSTION ENGINE AND METHOD FOR OPERATING AN INTERNAL COMBUSTION ENGINE
MOTEUR À COMBUSTION INTERNE ET PROCÉDÉ DE FONCTIONNEMENT D'UN MOTEUR À COMBUSTION INTERNE

(43) Veröffentlichungstag der Anmeldung: 12.01.2022
(73) Patentinhaber: Innio Jenbacher GmbH & Co OG, 6200 Jenbach (AT)
(72) Erfinder: KEITH, Douglas, Ashurst, Hampshire SO40 7 BD (GB); THALHAUSER, Josef, 83191 Nußdorf (DE); SPYRA, Nikolaus, 6020 Innsbruck (AT)
(74) Vertreter: Torggler & Hofmann Patentanwälte - Innsbruck
(86) Internationale Anmeldenummer: PCT/AT2019/060070
(87) Internationale Veröffentlichungsnummer: WO 2020/176911

(56) Entgegenhaltungen:
- WO-A1-2017/000012
- US-A1- 2003 127 079
- US-A1- 2006 288 701
- US-A1- 2014 174 073
- US-A1- 2018 135 541

## Beschreibung

Die vorliegende Erfindung betrifft eine Brennkraftmaschine mit den Merkmalen des Oberbegriffs des Anspruches 1, sowie ein Verfahren zum Regeln oder Steuern einer Brennkraftmaschine mit den Merkmalen des Oberbegriffs des Anspruches 20.

Es ist aus der EP 0259382 B1 eine Regelstrategie für eine Brennkraftmaschine bekannt, wobei in Abhängigkeit einer gemessenen Ist-Leistung der Brennkraftmaschine ein Ladedruck-Sollwert eingestellt wird. Durch einen ersten Regelkreis (Ladedruckregler) wird über einen Soll-Istwert-Vergleich der Ist-Ladedruck dem Ladedruck-Sollwert nachgeregelt. Bei diesem Ladedruck-Sollwert liegt ein bestimmter Zielwert der NOₓ-Emissionen vor. Da die NOₓ-Emission nicht direkt bekannt ist, wird der Ladedruck als Hilfsregelgröße verwendet. Der funktionale Zusammenhang liegt in Form einer Kurvenschar vor, wobei jede Kurve für einen bestimmten NOₓ-Wert den Zusammenhang zwischen Ist-Leistung und Ladedruck-Sollwert angibt. Insofern ist also der Ladedruckregler eigentlich ein Emissionsregelkreis in Bezug auf die NOₓ-Emissionen (NOₓ-Emissionsregelkreis).

Die Einstellung des Lambda-Wertes erfolgt über Beeinflussung einer Gasdosiereinrichtung. Die Veränderung des Lambda-Wertes würde an sich eine Veränderung der Leistung der Brennkraftmaschine bewirken, was durch einen zweiten Regelkreis (Leistungsregelkreis) ausgeglichen werden muss. Dieser Ausgleich im Leistungsregelkreis erfolgt über jene Aktuatoren, die den Ladedruck unmittelbar beeinflussen (beispielsweise durch die Drosselklappe, ein Wastegate, eine variable Turbinengeometrie, eine Verdichterumgehungsleitung, einen variablen Ventiltrieb oder ähnlichem). Der Ladedruck wird also direkt über das Verbrennungsluftverhältnis (Lambda-Wert) geregelt. Diese Regelstrategie ist als LEANOX-Regelung bekannt.

Es wird demgemäß also der funktionale Zusammenhang zwischen dem vor den Einlassventilen des Motors herrschenden, relativ leicht messbaren, Ladedruck und der Leistung genutzt, um die NOₓ-Emission zu kontrollieren.

Dazu ist der Ausgang der Ladedruckmessung mit einem Ist-Eingang des ersten Regelkreises verbunden. Im ersten Regelkreis der EP 0259382 B1 (Ladedruckregler) ist eine programmierbare Einrichtung zur Ermittlung eines leistungsabhängigen Soll-Wertes für den Ladedruck aus dem von der Leistungmessvorrichtung zugeführten Leistungsmesssignalangabe angeordnet.

Dabei erfolgt die Regelung des Ladedrucks indirekt über die Regelung des Verbrennungsluftverhältnisses (Lambda-Wertes) im Luft-Gas-Mischer, wobei beispielsweise ein Abmagern des Gemisches (Erhöhen von Lambda) eine Erhöhung des Ladedrucks vor den Einlassventilen bewirkt (bei der Forderung einer konstanten Motorleistung).

Obiges beschreibt die kaskadierte Form der LEANOX-Regelung. Es besteht auch die Möglichkeit, beide Regeleingriffe gleichzeitig durchzuführen (siehe dazu EP 2977596 B1). Die Erfindung ist bei beiden Formen der LEANOX-Regelung einsetzbar.

Eine Alternative besteht darin, statt des Ladedrucks den Zylinderdruck als Regelgröße zu verwenden. Dies ist beispielsweise bei der EP 2910755 B1 beschrieben. Die Erfindung ist auch bei einer solchen Regelung einsetzbar.

Weitere aus dem Stand der Technik bekannte Ausführungsvarianten gehen aus der US 2018/135541 A1, der US 2003/127079 A1, der US 2006/288701 A1 oder der US 2014/174073 A1 hervor.

Problematisch ist, dass die aus dem Stand der Technik bekannten Regelverfahren zur Emissionsregelung die Beeinflussung durch einen Abgasgegendruck nicht berücksichtigen, wodurch sich ein ungünstiges Emissionsverhalten ergeben kann.

Wenn beispielsweise in der Abgasleitung ein Umgehungsventil für eine Abgasturbine eines Turboladers (auch als Waste-Gate bekannt) geschlossen wird, steigt ein Abgasgegendruck auf den Brennraum, was zu einer Erhöhung der NOₓ-Emissionen führt.

Die bekannten Regelstrategien erkennen somit keine Veränderung der NOₓ-Emissionen durch geänderten Abgasgegendruck. Folglich werden erhöhte NOₓ-Emissionen ausgestoßen, was sich nachteilig auf die zu erreichenden Emissionszielwerte und natürlich auch die Langzeitbeobachtung der NOₓ-Emissionen einer Brennkraftmaschine auswirkt.

Aufgabe der Erfindung ist die Bereitstellung einer Brennkraftmaschine und eines Verfahren zum Betreiben einer Brennkraftmaschine mit einer gegenüber dem Stand der Technik verbesserten Steuer- oder Regeleinrichtung bzw. Strategie, wobei ungewollte Erhöhungen der NOx-Emissionen bei einer Veränderung des Abgasgegendruckes vermieden werden können.

Diese Aufgabe wird durch eine Brennkraftmaschine mit einer Steuer- oder Regeleinrichtung mit den Merkmalen des Anspruches 1 gelöst.

Dies geschieht, indem die Steuer- oder Regeleinheit einen Emissionsregelkreis aufweist, der dazu ausgebildet ist, über einen funktionalen Zusammenhang den wenigstens einen Verbrennungsparameter als Ersatzgröße für die NOₓ-Emission durch wenigstens einen den wenigstens einen Verbrennungsparameter beeinflussenden Aktuator so anzusteuern, dass für jede Soll-Leistung oder Ist-Leistung der Brennkraftmaschine wenigstens ein Verbrennungsparameter einstellbar ist, wobei der funktionale Zusammenhang den Ladedruck auf Basis eines gewünschten Wertes der Leistung, der NOx-Emissionen und eines Abgasgegendruckes bestimmt und in der Steuer- oder Regeleinrichtung hinterlegt ist, wodurch der funktionale Zusammenhang einen Einfluss einer Veränderung des auf den wenigstens einen Brennraum wirkenden Abgasgegendruckes berücksichtig.

Indem also der funktionale Zusammenhang den Einfluss einer Veränderung eines auf den wenigstens einen Brennraum wirkenden Abgasgegendruckes berücksichtig, kann bei der Steuerung oder Regelung der Brennkraftmaschine der hinsichtlich Emissionen und/oder Wirkungsgrad günstigste Steuer- oder Regeleingriff vorgenommen werden.

Mithilfe der Erfindung kann eine unkontrollierte Veränderung der NOₓ-Emissionen, aufgrund einer Veränderung eines Abgasgegendruckes, noch vor Auftreten einer NOₓ-Emissioneveränderung entgegengewirkt werden. Folglich können durch den Gesetzgeber auferlegte NOₓ-Emissionswerte jederzeit eingehalten werden.

Dies gilt insbesondere für den sogenannten NOₓ-Durchschnittswert des NOₓ-Anteils der Abgase an einer Austrittstelle der Brennkraftmaschine. Dieser NOₓ-Durchschnittswert des NOₓ-Anteils der Abgase ist meist ein durch den Gesetzgeber vorgegebener Wert, welcher von der Brennkraftmaschine hinsichtlich eines vorgegebenen Zeitraumes eingehalten werden muss.

Die Erfindung erlaubt es des Weiteren eine Brennkraftmaschine möglichst nahe an den vorgegebenen NOₓ-Emissionsgrenzen zu betreiben ohne NOₓ-Regelreserven vorzusehen, welche einen ungewollten zwischenzeitlichen Anstieg der NOₓ-Emissionen kompensieren. Folglich kann die Brennkraftmaschine auch mit einer höheren Leistung oder mit einer höheren Effizienz betrieben werden.

Grundsätzlich sind bezüglich der Art der Treibstoffeinbringung in wenigstens einem Brennraum der Brennkraftmaschine zwei Typen von Verfahren bekannt. Der erste Typ sind luftaufgeladenen Brennkraftmaschinen mit zylinderindividueller Treibstoffzufuhr (z.B. unter Verwendung von Pord-Injection-Ventilen). Der zweite Typ sind gemischaufgeladene Brennkraftmaschinen. Die Erfindung ist bei beiden Typen der Brennkraftmaschinen einsetzbar.

Vorteilhafte Ausführungsformen der Erfindung sind in den abhängigen Ansprüchen definiert.

Vorzugsweise ist vorgesehen, dass die Steuer- oder Regelvorrichtung dazu ausgebildet ist, bei einer Verstellung eines Umgehungsventils einer Abgasturbine eine Veränderung des Umgehungsventils eines Verdichters derart durchzuführen, dass die NOx-Emissionen konstant gehalten werden

Es kann vorgesehen sein, dass der funktionale Zusammenhang einen Einfluss einer Verstellung wenigstens eines auf den wenigstens einen Brennraum wirkenden Abgasgegendruck beeinflussenden Aktuators berücksichtigt.

Vorzugsweise ist vorgesehen, dass bei einer Erhöhung des Abgasgegendruckes, die Berücksichtigung des funktionalen Zusammenhangs so erfolgt, dass der Emissionsregelkreis durch Veränderung des Verbrennungsparameters ein gegenüber dem vorherigen Betriebspunkt magereres Treibstoff-Luft-Gemisch einstellt.

Das Abmagern des Treibstoff-Luft-Gemisches ist eine durch den Stand der Technik bekannte Maßnahme, bei der das Verbrennungsluftverhältnis erhöht wird. Dies kann bekanntermaßen dadurch erfolgen, indem die Treibstoffzufuhr verringert wird oder der Ladedruck oder die Luftzufuhr erhöht wird.

Es kann vorzugsweise vorgesehen sein, dass bei einer Erhöhung des Abgasgegendruckes, die Berücksichtigung des funktionalen Zusammenhangs so erfolgt, dass der Emissionsregelkreis durch Veränderung des Verbrennungsparameters ein gegenüber dem vorherigen Betriebspunkt späteren Zündzeitpunkt einstellt.

Das Verschieben eines Zündzeitpunktes nach Spät hat ein Senken der Zylinderspitzentemperatur zur Folge, was zu einer Verringerung der NOₓ-Emissionen führt.

Bevorzugt kann vorgesehen sein, dass bei einer Erhöhung des Abgasgegendruckes, die Berücksichtigung des funktionalen Zusammenhangs so erfolgt, dass der Emissionsregelkreis durch Veränderung des Verbrennungsparameters ein gegenüber dem vorherigen Betriebspunkt geringeren Füllgrades des wenigstens einen Brennraums einstellt.

Natürlich können gegenteilige Maßnahmen gesetzt werden, wenn der Abgasgegendruck sinkt. Dementsprechend kann es beispielsweise vorgesehen sein, dass bei Sinken eines Abgasgegendruckes eine Maßnahme gesetzt wird, um beispielsweise die NOₓ-Emission bei gleicher Leistung möglichst konstant zu halten.

Es ist bekannt, die Einlassventile einer Brennkraftmaschine zu schließen, bevor der Kolben im Ansaugtrakt seinen unteren Totpunkt erreicht hat (frühes Miller-Verfahren). In einem alternativen Verfahren werden die Einlassventile im Verdichtungstrakt nach dem Erreichen der maximalen Füllung im Zylinder geschlossen (spätes Miller-Verfahren). Dies kann beispielsweise durch einen variablen Ventiltrieb ermöglicht werden, der eine variable Betätigungscharakteristik der Einlassventile gestattet.

Ein frühes Miller-Verfahren mit einer veränderten Betätigungscharakteristik der Einlassventile in die Richtung eines verringerten Füllgrades kann zur Folge haben:
- um eine konstante Leistung zu erbringen, muss die in den Brennraum eingebrachte Energie annähernd konstant gehalten werden, weswegen der Ladedruck steigen muss
- durch die Expansion und/oder die verringerte effektive Verdichtung sinkt die Temperatur der Zylinderlandung zum Zündzeitpunkt und daraus ergeben sich folglich geringere NOₓ-Emissionen.

Das Miller-Verfahren zum Einstellen eines Füllgrades des wenigstens einen Brennraumes kann beispielsweise über einen variablen Ventiltrieb erfolgen.

Ein variabler Ventiltrieb wird häufig deshalb eingesetzt, weil damit eine Brennkraftmaschine bei unterschiedlichen Betriebspunkten mit dem günstigsten Wirkungsgrad betrieben werden kann. Auch ist es bekannt, einen variablen Ventiltrieb zur Leistungsregelung einzusetzen, etwa um einen drosselklappenfreien Betrieb zu realisieren.

Eine Änderung der Betriebscharakteristik eines Einlassventils bewirkt eine Veränderung des Liefergrades (Füllgrades) und damit des Massendurchsatzes der Brennkraftmaschine.

Ein Leistungsregelkreis ist dazu ausgebildet, eine Ist-Leistung der Brennkraftmaschine an eine Soll-Leistung der Brennkraftmaschine anzugleichen.

Unter Annahme konstanter Leistung und konstanter NOₓ-Emissionen muss bei einer Betätigungscharakteristik mit geringerem Füllgrad der Ladedruck angehoben werden, aber nicht soweit, dass sich das gleiche Treibstoff-LuftVerhältnis einstellt, da eine stärkere Kühlung der Zylinderladung gegeben ist.

Es kann vorgesehen sein, dass der wenigstens eine durch die Steuer- oder Regeleinrichtung beeinflussbare Verbrennungsparameter ein Verbrennungsluftverhältnis umfasst. Das Verbrennungsluftverhältnis ist auch unter den Synonymen Luftüberschusszahl, Lambda-Wert oder Luftverhältnis bekannt.

Zur Beeinflussung des Verbrennungsluftverhältnisses durch die Steuer- oder Regeleinrichtung kann
- eine Einstellung eines Ladedrucks,
- eine Einstellung einer Einspritzmenge eines Treibstoffes in den wenigstens einen Brennraum und/oder
- eine Einstellung eines Mischverhältnisses des Treibstoffluftgemisches (beispielsweise durch einen Gasmischer) vorgenommen werden.

Vorzugsweise ist vorgesehen, dass der wenigstens eine durch die Steuer- oder Regeleinrichtung beinflussbare Verbrennungsparameter einen Ladedruck umfasst. Besonders bevorzugt ist dabei vorgesehen, dass die Steuer- oder Regeleinrichtung bei Beeinflussung des Ladedruckes ein entsprechendes Verbrennungsluftverhältnis durch
- Einstellen einer Einspritzmenge eines Treibstoffes in den wenigstens einen Brennraum und/oder
- Einstellen eines Mischverhältnisses des Treibstoff-Luft-Gemisches eingestellt.

Es kann vorgesehen sein, dass der wenigstens eine durch die Steuer- oder Regeleinrichtung beeinflussbare Verbrennungsparameter einen Zündzeitpunkt umfasst. Dieser Zündzeitpunkt kann beispielsweise durch eine entsprechende Ansteuerung einer Zündkerze verschoben werden.

Vorzugsweise kann vorgesehen sein, dass die Steuer- oder Regeleinrichtung dazu ausgebildet ist, den wenigstens einen Verbrennungsparameter beeinflussenden Aktuator anzusteuern, um eine Veränderung eines Füllgrades des wenigstens einen Brennraumes, vorzugsweise mittels Verstellung wenigstens eines variablen Ventiltriebs, vorzunehmen.

Es kann vorgesehen sein, dass der wenigstens eine Verbrennungsparameter beeinflussende Aktuator als Drosselklappe ausgebildet ist.

Bevorzugt ist vorgesehen, dass die Steuer- oder Regeleinrichtung dazu ausgebildet ist, den wenigstens einen Verbrennungsparameter beeinflussenden Aktuator anzusteuern, um eine Einstellung einer dem wenigstens einem Brennraum zugeführten Treibstoffmenge und/oder eines Einspritzzeitpunktes eines dem wenigstens einen Brennraum zugeführten Treibstoffes, vorzugsweise mittels Ansteuerung wenigstens eines Port-Injection-Ventils, vorzunehmen.

Beispielsweise kann vorgesehen sein, dass die Steuer- oder Regeleinrichtung dazu ausgebildet ist, den wenigstens einen Verbrennungsparameter beeinflussenden Aktuator anzusteuern, um eine Einstellung eines Ladedrucks, vorzugsweise mittels Verstellung eines Umgehungsventiles für einen Verdichter und/oder einer wenigstens einem Verdichter zugehörigen variablen Verdichtergeometrie, vorzunehmen. Umgehungsventile für einen Verdichter sind auch unter dem Namen Kompressor-Bypass-Ventile bekannt.

Es kann vorgesehen sein, dass die Steuer- oder Regeleinrichtung zur Ermittlung einer Veränderung eines auf den wenigstens einen Brennraum wirkenden Abgasgegendruckes eine Verstellung wenigstens eines auf den wenigstens einen Brennraum wirkenden Abgasgegendruck beeinflussenden Aktuators berücksichtigt.

Vorzugsweise ist vorgesehen, dass der wenigstens eine auf den Brennraum wirkende Abgasgegendruck beeinflussende Aktuator ein Umgehungsventil für eine Abgasturbine eines Turboladers umfasst. Umgehungsventile für eine Abgasturbine eines Turboladers sind auch als Waste-Gates bekannt.

Bevorzugt ist vorgesehen, dass der wenigstens eine auf den Brennraum wirkende Abgasgegendruck beeinflussende Aktuator eine einer Abgasturbine zugehörige variable Turbinengeometrie umfasst.

Es kann vorgesehen sein, dass der wenigstens eine auf den Brennraum wirkende Abgasgegendruck beeinflussende Aktuator ein Umgehungsventil für einen vor einer Abgasturbine eines Turboladers angeordneten Katalysator umfasst.

Solche vor einer Abgasturbine eines Turboladers angeordnete Katalysatoren sind durch den Stand der Technik auch unter dem Namen PTCC-Katalysatoren (Pre Turbo Charger Catalyst) bekannt. Dabei wird zwischen dem wenigstens einen Brennraum und der Abgasturbine eines Turboladers ein Katalysator angeordnet. Insbesondere bei großvolumigen Motoren hat dies den Vorteil, dass es möglich ist, die Wirkung des Turboladers zu verbessern, denn die Freisetzung von chemischer Energie, welche nach der Verbrennung in dem wenigstens einen Brennraum noch im abgeführten Stoffstrom gespeichert ist, führt zu einer höheren Temperatur des Stoffstroms und einer Expansion des Stoffstroms, welche sich in einem höheren Volumenstrom an der Abgasturbine des Turboladers niederschlägt. Der durch die Abgasturbine angetriebene Verdichter des Turboladers kann somit einen höheren Ladedruck hervorbringen, womit eine höhere Gesamtleistung der Brennkraftmaschine erreicht werden kann.

Es kann vorgesehen sein, dass die Steuer- oder Regeleinrichtung zur Ermittlung einer Veränderung eines auf den wenigstens einen Brennraum wirkenden Abgasgegendruckes eine Veränderung eines durch wenigstens einen Sensor erfassten Messsignales in einer Abgasleitung der Brennkraftmaschine berücksichtigt.

Besonders bevorzugt kann vorgesehen sein, dass die Brennkraftmaschine ein stationärer, mit Brenngas betriebener, Hubkolbenmotor ist und vorzugsweise einen Generator zur Stromerzeugung antreibt.

Weiters wird Schutz begehrt für ein Verfahren zum Regeln oder Steuern einer Brennkraftmaschine, wobei in wenigstens einem Brennraum der Brennkraftmaschine ein Treibstoffluftgemisch mit wenigstens einem beinflussbaren Verbrennungsparameter verbrannt wird, wobei der wenigstens eine Verbrennungsparameter im Rahmen eines Emissionsregelkreises als Ersatzgröße für NOₓ-Emissionen über einen funktionalen Zusammenhang durch wenigstens einen den wenigsten einen Verbrennungsparameter beeinflussenden Aktuator so gesteuert oder geregelt wird, dass für jede Soll-Leistung oder Ist-Leistung der Brennkraftmaschine wenigstens ein Verbrennungsparameter eingestellt wird, wobei der funktionale Zusammenhang den Ladedruck auf Basis eines gewünschten Wertes der Leistung, der NOx-Emissionen und eines Abgasgegendruckes bestimmt, wobei durch den funktionalen Zusammenhang ein Einfluss einer Veränderung des auf den wenigstens einen Brennraum wirkenden Abgasgegendruckes berücksichtigt wird.

Weitere Vorteile und Einzelheiten der Erfindung ergeben sich anhand der Figuren sowie der dazugehörigen Figurenbeschreibung. Dabei zeigen:
- Fig. 1: ein erstes Ausführungsbeispiel einer erfindungsgemäßen Brennkraftmaschine,
- Fig. 2: ein zweites Ausführungsbeispiel einer erfindungsgemäßen Brennkraftmaschine,
- Fig. 3: ein drittes Ausführungsbeispiel einer erfindungsgemäßen Brennkraftmaschine,
- Fig. 4: ein viertes Ausführungsbeispiel einer erfindungsgemäßen Brennkraftmaschine,
- Fig. 5: ein fünftes Ausführungsbeispiel einer erfindungsgemäßen Brennkraftmaschine,
- Fig. 6: ein sechstes Ausführungsbeispiel einer erfindungsgemäßen Brennkraftmaschine,
- Fig. 7: ein siebtes Ausführungsbeispiel einer erfindungsgemäßen Brennkraftmaschine,
- Fig. 8: ein achtes Ausführungsbeispiel einer erfindungsgemäßen Brennkraftmaschine und
- Fig. 9: ein Diagramm von Ladedruck über Leistung für verschiedene Abgasgegendrücke.

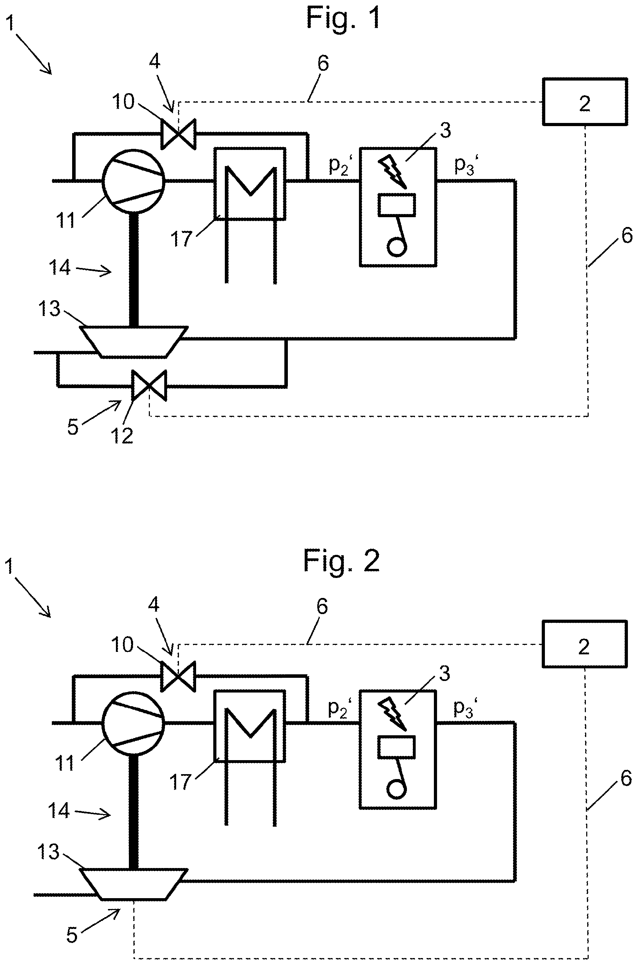

Fig. 1 zeigt ein erstes Ausführungsbeispiel einer erfindungsgemäßen Brennkraftmaschine 1. Diese Brennkraftmaschine verfügt über einen Brennraum 3, in welchen ein Treibstoff-Luft-Gemisch verbrannt wird. Natürlich ist die Erfindung nicht auf einen Brennraum 3 beschränkt und in den Figuren dient der eine Brennraum 3 rein exemplarischen zwecken. Die Erfindung kann bei einer Brennkraftmaschine 1 für einen oder mehrere Brennräume 3 selektiv und/oder global für alle ihren Einsatz finden.

Das Brennstoff-Luft-Gemisch wird dem wenigstens einen Brennraum über einen Verdichter 11 eines Turboladers 14 zugeführt, wobei das Brennstoff-Luft-Gemisch nach der Verdichtung durch den Verdichter 11 in einem Gemischkühler 17 gekühlt werden kann. Der Gemischkühler 17 und der Verdichter 11 sind durch eine Umgehungsleitung mit einem Umgehungsventil 10 umgehbar, wobei durch dieses Umgehungsventil 10 ein Ladedruck p₂' einstellbar ist, mit welchem Ladedruck p₂' der wenigstens eine Brennraum 3 befüllbar ist.

Durch Veränderung des Ladedrucks p₂' kann bei konstanten Ventilöffnungszeiten der Brennkraftmaschine 1 die Füllung des wenigstens einen Brennraumes 3 variiert werden.

Des Weiteren verfügt der Turbolader 14 über eine Abgasturbine 13, welche durch eine Umgehungsleitung samt Umgehungsventil 12 umgehbar ist. Durch dieses Umgehungsventil 12 kann ein Abgasgegendruck p₃', welcher auf den wenigstens einen Brennraum 3 wirkt, eingestellt werden.

Es ist eine Steuer- oder Regeleinrichtung 2 vorgesehen, welche durch signalleitende Verbindungen 6 einerseits mit dem Umgehungsventil 10 des Verdichters 11 signalleitend verbunden ist und andererseits mit dem Umgehungsventil 12 der Abgasturbine 13 signalleitend verbunden ist. Das Umgehungsventil 10 des Verdichters 11 (und auch des Gemischkühlers 17) ist in diesem Ausführungsbeispiel als Verbrennungsparameter beeinflussender Aktuator 4 ausgebildet. Das Umgehungsventil 12 der Abgasturbine 13 bildet in diesem Ausführungsbeispiel den Abgasgegendruck p₃' beeinflussenden Aktuator 5.

Die Steuer- oder Regeleinrichtung 2 ist dazu ausgebildet, über einen funktionalen Zusammenhang den wenigstens einen Verbrennungsparameter (der Ladedruck p₂') als Ersatzgröße für die NOₓ-Emission durch wenigstens einen den wenigstens einen Verbrennungsparameter beeinflussenden Aktuator 4 (in diesem Ausführungsbeispiel das Umgehungsventil 10 des Verdichters 11) so anzusteuern, dass für jede Soll-Leistung oder Ist-Leistung der Brennkraftmaschine 1 wenigstens ein Verbrennungsparameter einstellbar ist, wobei der funktionale Zusammenhang einen Einfluss einer Verstellung wenigstens eines auf den wenigstens einen Brennraum 3 wirkenden Abgasgegendruck p₃' beeinflussenden Aktuator 5 (in diesem Ausführungsbeispiel das Umgehungsventil 12 der Abgasturbine 13) berücksichtigt.

In anderen Worten ist die Steuer- oder Regeleinrichtung dazu ausgebildet, bei einer Verstellung des Umgehungsventils 12 eine Veränderung des Umgehungsventils 10 des Verdichters 11 durchzuführen, sodass die NOₓ-Emissionen konstant gehalten werden können, da eine Veränderung der Stellung des Umgehungsventils 12 der Abgasturbine 13direkten Einfluss auf den Abgasgegendruck p₃' (welcher auf den wenigstens einen Brennraum 3 wirkt) hat und somit Einfluss auf die NOₓ-Produktion im wenigstens einen Brennraum 3 (durch einen geänderten Wirkungsgrad und geänderte Restgasanteile und -temperaturen) hat. Jedoch können die NOₓ-Emissionen konstant gehalten werden, indem der Ladedruck p₂' durch das Umgehungsventil 10 des Verdichters 11 angepasst wird.

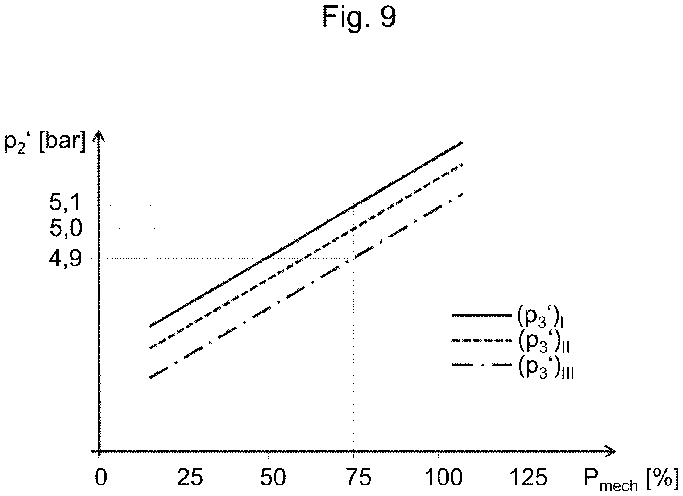

Durch den in der Steuer- oder Regeleinheit 2 hinterlegten funktionale Zusammenhang kann der Ladedruck p₂' auf Basis des gewünschten Wertes für die Leistung P_{mech}, die NOₓ-Emissionen und einen gegebenen Abgasgegendruck p₃' bestimmt werden. Wie dieser funktionale Zusammenhang im speziellen aussieht, soll später noch erörtert werden (siehe Fig. 9).

In Fig. 2 ist ein ähnliches Ausführungsbeispiel gezeigt, jedoch ist in diesem zweiten Ausführungsbeispiel der Brennkraftmaschine 1 der den Abgasgegendruck p₃' beeinflussende Aktuator 5 die variable Turbinengeometrie der Abgasturbine 13 des Turboladers 14. Durch eine Verstellung dieser variablen Turbinengeometrie stellt sich ebenfalls eine Veränderung des auf den wenigstens einen Brennraum 3 wirkenden Abgasgegendruckes p₃' ein, womit durch die Steuer- oder Regeleinrichtung 2 das Umgehungsventil 10 des Verdichters 11 verstellbar ist und über einen funktionalen Zusammenhang der Ladedruck p₂' entsprechend einstellbar ist, um die NOₓ-Emissionen konstant zu halten.

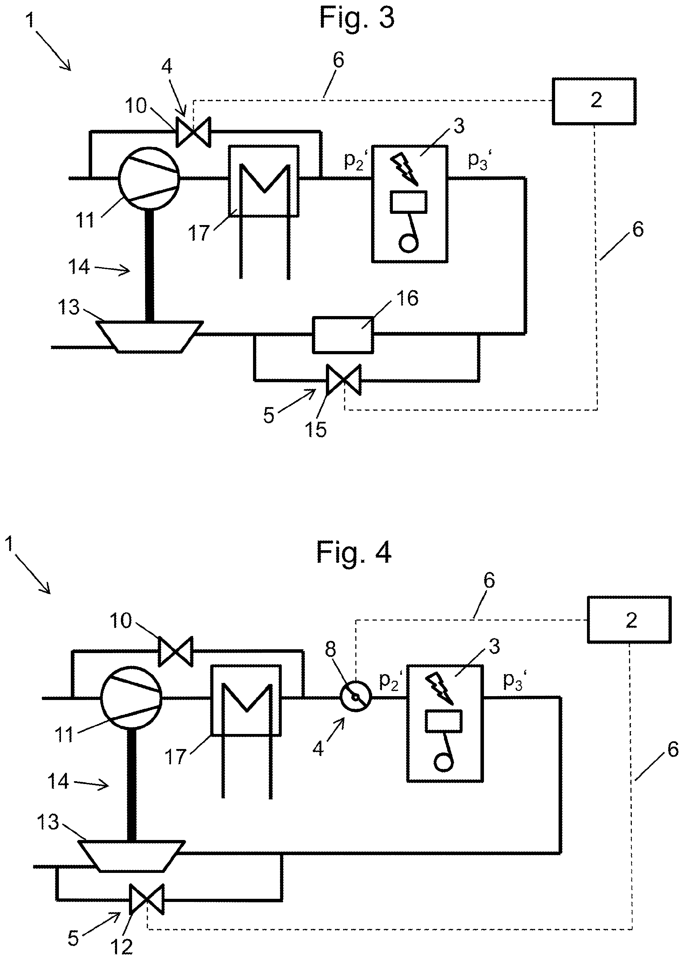

Im Ausführungsbeispiel der Fig. 3 ist ein Katalysator 16 zwischen dem wenigstens einen Brennraum 3 und der Abgasturbine 13 vorgesehen. Solche Katalysatoren 16 sind auch unter dem Synonym PTCC-Katalysatoren bekannt und werden dazu verwendet, chemische Energie im Abgasstrom freizusetzen, wodurch die Abgastemperatur erhöht wird, was zu einer Explosion des Abgases führt, wodurch wiederum ein auf die Abgasturbine 13 wirkender Stoffstrom erhöht werden kann, womit die Effizienz des Turboladers 14 gesteigert wird. Um dieses Vorgehen steuern oder regeln zu können, ist ein Umgehungsventil 15 des Katalysators 16 vorgesehen, welches Umgehungsventil 15 über eine signalleitende Verbindung 6 mit der Steuer- oder Regeleinheit 2 verbunden ist.

Das Umgehungsventil 15 des Katalysators 16 ist ein Abgasgegendruck p₃' beeinflussender Aktuator 5, wodurch wiederum bei Veränderung der Stellung des Abgasgegendruck p₃' beeinflussenden Aktuators 5 (des Umgehungsventils 15 des Katalysators 16) das Umgehungsventil 10 des Verdichters 11 über den funktionalen Zusammenhang dermaßen angesteuert wird, dass ein Ladedruck p₂' entsprechend korrigiert wird, um einen möglichst konstanten NOₓ-Emissionswert zu erhalten.

Das Ausführungsbeispiel der Fig. 4 zeigt eine Brennkraftmaschine 1 ähnlich dem Ausführungsbeispiel der Fig. 1. Jedoch wird in diesem Ausführungsbeispiel eine Drosselklappe 8 als den Verbrennungsparameter beeinflussender Aktuator 4 verwendet, wodurch ebenfalls ein Füllgrad des wenigstens einen Brennraumes 3 beeinflussbar ist.

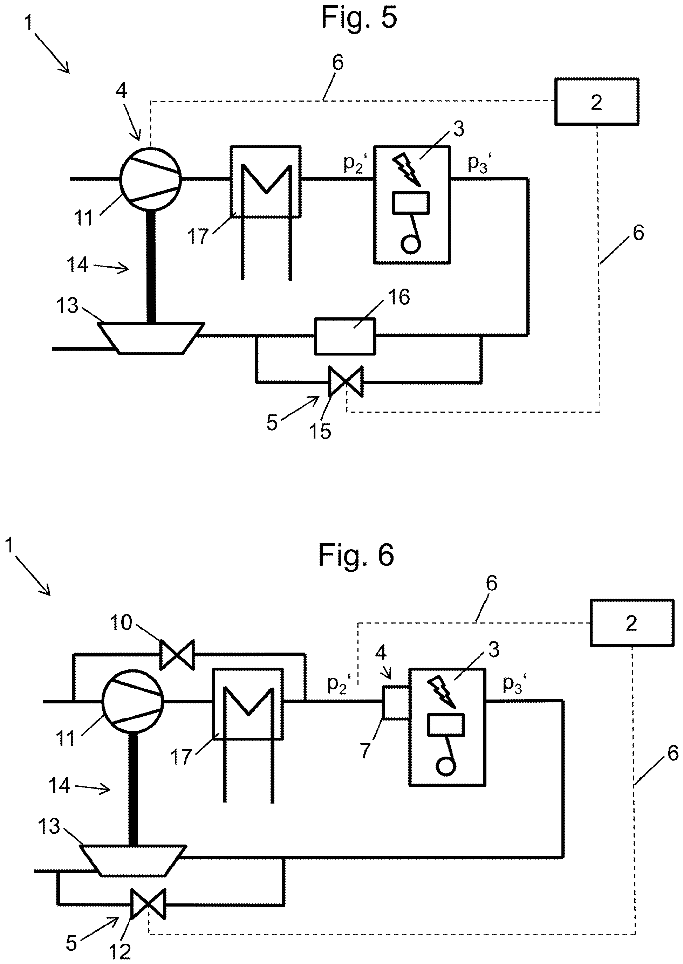

Das Ausführungsbeispiel der Fig. 5 stellt wiederum ein ähnliches Ausführungsbeispiel zu der Fig. 3 dar, jedoch verfügt die Brennkraftmaschine 1 des Ausführungsbeispiels der Fig. 5 über einen Verdichter 11 mit einer variablen Verdichtergeometrie, wobei die Verdichtergeometrie bzw. die Verstelleinheit der Verdichtergeometrie signalleitend über eine signalleitende Verbindung 6 mit der Steuer- oder Regeleinheit 2 verbunden ist und die Steuer- oder Regeleinheit 2 die variable Verdichtergeometrie des Verdichters 11 als Aktuator 4 verwendet zur Einstellung eines Verbrennungsparameters (genauer gesagt des Ladedruckes p₂').

Das Ausführungsbeispiel der Fig. 6 zeigt ein ähnliches Ausführungsbeispiel zu jenem der Fig. 1, jedoch weist die Brennkraftmaschine 1 des Ausführungsbeispiels der Fig. 6 einen variablen Ventiltrieb 7 auf, mittels welchem ein Füllgrad des wenigstens einen Brennraums 3 einstellbar ist (beispielsweise gemäß einem frühen oder späten Miller-Verfahren). Dieser variable Ventiltrieb 7 ist wiederum über eine signalleitende Verbindung 6 mit der Steuer- oder Regeleinheit 2 verbunden, wobei der variable Ventiltrieb 7 als Verbrennungsparameter beeinflussender Aktuator 4 durch die Steuer- oder Regeleinheit 2 gesteuert oder geregelt wird.

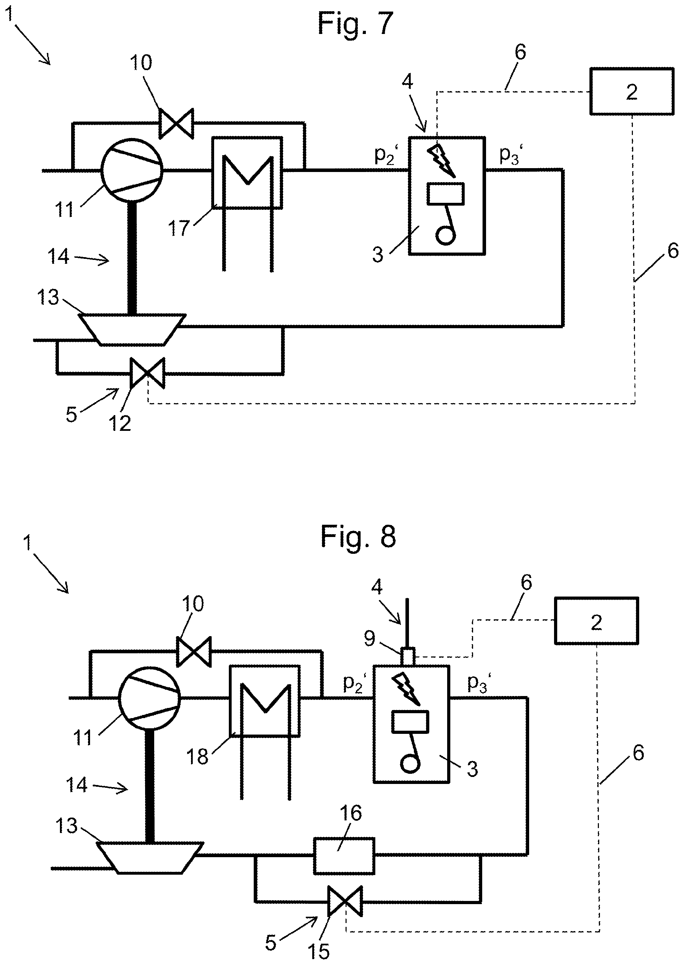

Ähnlich ist ebenfalls das Ausführungsbeispiel der Fig. 7 einer Brennkraftmaschine 1 gestaltet, jedoch wird im Ausführungsbeispiel der Fig. 7 als den Verbrennungsparameter beeinflussender Aktuator 4 die Ansteuerung einer Zündvorrichtung verwendet, mittels derer ein Zündzeitpunkt der Verbrennung geregelt oder gesteuert wird. Dies geschieht, indem die Steuer- oder Regeleinheit 2 über eine signalleitende Verbindung 6 mit der Zündeinrichtung des wenigstens einen Brennraums 3 verbunden ist.

Das Ausführungsbeispiel der Fig. 8 zeigt eine Brennkraftmaschine 1, welche über eine von der Luftzufuhr separierte Einspritzeinheit für Treibstoff in den wenigstens einen Brennraum 3 verfügt. Diese Einspritzeinheit für Treibstoff in den wenigstens einen Brennraum 3 ist als Port-Injection-Ventil 9 ausgeführt.

Die Luftzufuhr erfolgt über einen Verdichter 11 eines Turboladers 14, wobei die verdichtete Luft vor Eintritt in den wenigstens einen Brennraum 3 mittels eines Ladeluftkühlers 18 gekühlt wird. Um den Ladedruck p₂' variieren zu können, ist eine Umgehungsleitung mit einem Umgehungsventil 10 des Verdichters 11 vorgesehen.

In der Abgasleitung ist - wie bereits in den vorhergehenden Figuren beschrieben - eine Abgasturbine 13 vorgesehen und ein zwischen der Abgasturbine 13 und dem wenigstens einen Brennraum 3 angeordneter Katalysator 16, welcher durch eine Umgehungsleitung mit einem Umgehungsventil 15 des Katalysators 16 umgehbar ist.

Die Steuer- oder Regeleinheit 2 ist über signalleitende Verbindungen mit einem den Verbrennungsparameter beeinflussenden Aktuator 4 verbunden und einen den Abgasgegendruck p₃' beeinflussenden Aktuator 5 verbunden.

Der den Verbrennungsparameter beeinflussende Aktuator 4 ist in diesem Ausführungsbeispiel als Port-Injection-Ventil 9 ausgebildet, durch dessen Ansteuerung ein Verbrennungsluftverhältnis λ im wenigstens einen Brennraum 3 beeinflussbar ist. Der den Abgasgegendruck p₃' beeinflussende Aktuator 5 ist in diesem Ausführungsbeispiels als Umgehungsventil 15 des Katalysators 16 ausgebildet.

Fig. 9 zeigt ein Diagramm des Ladedrucks p₂' einer Brennkraftmaschine 1 über die von der Brennkraftmaschine 1 erbrachte mechanische Leistung P_{mech} Eingezeichnet ist der Zusammenhang für drei unterschiedliche Abgasgegendrücke p₃' bei vorgegebenen - also für alle drei Kurven gleichen - NOₓ-Emissionen.

Dieses Diagramm stellt die mechanische Leistung P_{mech} der Brennkraftmaschine 1 mit dem Ladedruck p₂' in Beziehung, wobei für jeden NOₓ-Soll-Wert (im abgebildeten Diagramm konstant) und für jeden Abgasgegendruck p₃' eine Kurve vorhanden ist. Diese Kurvenschar bildet den funktionalen Zusammenhang.

Um eine konstante NOₓ-Emission bei Veränderung des Abgasgegendrucks p₃' (beispielsweise durch Veränderung des den Abgasgegendruck p₃' beeinflussenden Aktuators 5) zu erhalten, ist ein entsprechender Ladedruck p₂' zu wählen, um eine konstante mechanische Leistung P_{mech} der Brennkraftmaschine 1 von 75 % halten zu können. Dieser funktionale Zusammenhang ist bei der Steuer- oder Regelung der Brennkraftmaschine 1 durch die Steuer- oder Regeleinheit 2 heranzuziehen.

### Bezugszeichenliste:

- 1: Brennkraftmaschine
- 2: Steuer- oder Regeleinrichtung
- 3: Brennraum
- 4: Verbrennungsparameter beeinflussender Aktuator
- 5: Abgasgegendruck beeinflussender Aktuator
- 6: signalleitende Verbindung
- 7: Variabler Ventiltrieb
- 8: Drosselklappe
- 9: Port-Injection-Ventil
- 10: Umgehungsventil des Verdichters
- 11: Verdichter
- 12: Umgehungsventil der Abgasturbine
- 13: Abgasturbine
- 14: Turbolader
- 15: Umgehungsventil des Katalysators
- 16: Katalysator
- 17: Gemischkühler
- 18: Ladeluftkühler
- p₂': Ladedruck
- p₃': Abgasgegendruck
- λ: Verbrennungsluftverhältnis
- P_{mech}: mechanische Leistung

## Patentansprüche

1. Brennkraftmaschine mit einer Steuer- oder Regeleinrichtung (2), wobei wenigstens ein Brennraum (3) der Brennkraftmaschine (1) dazu ausgebildet ist, ein Treibstoff-Luft-Gemisch mit wenigstens einem durch die Steuer- oder Regeleinrichtung (2) beeinflussbaren Verbrennungsparameter zu verbrennen, wobei die Steuer- oder Regeleinrichtung (2) einen Emissionsregelkreis aufweist, der dazu ausgebildet ist, über einen funktionalen Zusammenhang den wenigstens einen Verbrennungsparameter als Ersatzgröße für die NOₓ-Emission durch wenigstens einen den wenigstens einen Verbrennungsparameter beeinflussenden Aktuator (4) so anzusteuern, dass für jede Soll-Leistung oder Ist-Leistung der Brennkraftmaschine (1) wenigstens ein Verbrennungsparameter einstellbar ist, **dadurch gekennzeichnet, dass** der funktionale Zusammenhang den Ladedruck (p₂') auf Basis eines gewünschten Wertes der Leistung (P_{mech}), der NOx-Emissionen und eines Abgasgegendruckes (p₃') bestimmt und in der Steuer- oder Regeleinrichtung (2) hinterlegt ist, wodurch der funktionale Zusammenhang einen Einfluss einer Veränderung des auf den wenigstens einen Brennraum (3) wirkenden Abgasgegendruckes (ps`) berücksichtigt.

2. Brennkraftmaschine nach dem vorangegangenen Anspruch, **dadurch gekennzeichnet, dass** die Steuer- oder Regelvorrichtung (2) dazu ausgebildet ist, bei einer Verstellung eines Umgehungsventils (12) einer Abgasturbine (13) eine Veränderung des Umgehungsventils (10) eines Verdichters (11) derart durchzuführen, dass die NOx-Emissionen konstant gehalten werden.

3. Brennkraftmaschine nach einem der vorangegangenen Ansprüche, **dadurch gekennzeichnet, dass** bei einer Erhöhung des Abgasgegendruckes (p₃'), die Berücksichtigung des funktionalen Zusammenhanges so erfolgt, dass der Emissionsregelkreis durch Veränderung des Verbrennungsparameters ein gegenüber dem vorherigen Betriebspunkt magereres Treibstoff-Luft-Gemisch einstellt.

4. Brennkraftmaschine nach wenigstens einem der vorangegangenen Ansprüche, **dadurch gekennzeichnet, dass** bei einer Erhöhung des Abgasgegendruckes (p₃'),die Berücksichtigung des funktionalen Zusammenhanges so erfolgt, dass der Emissionsregelkreis durch Veränderung des Verbrennungsparameters ein gegenüber dem vorherigen Betriebspunkt späteren Zündzeitpunkt einstellt.

5. Brennkraftmaschine nach wenigstens einem der vorangegangenen Ansprüche, **dadurch gekennzeichnet, dass** bei einer Erhöhung des Abgasgegendruckes (p₃'),die Berücksichtigung des funktionalen Zusammenhanges so erfolgt, dass der Emissionsregelkreis durch Veränderung des Verbrennungsparameters ein gegenüber dem vorherigen Betriebspunkt geringeren Füllgrad des wenigstens einen Brennraumes (3) einstellt.

6. Brennkraftmaschine nach wenigstens einem der vorangegangenen Ansprüche, **dadurch gekennzeichnet, dass** der wenigstens eine durch die Steuer- oder Regeleinrichtung (2) beinflussbare Verbrennungsparameter ein Verbrennungsluftverhältnis (λ) umfasst.

7. Brennkraftmaschine nach dem vorangegangenen Anspruch, **dadurch gekennzeichnet, dass** die Steuer- oder Regeleinrichtung das beinflussbare Verbrennungsluftverhältnis (λ) durch
- Einstellen eines Ladedruckes (p₂'),
- Einstellen einer Einspritzmenge eines Treibstoffes in den wenigstens einen Brennraum (3) und/oder durch
- Einstellen eines Mischverhältnisses des Treibstoff-Luft-Gemisches beeinflusst.

8. Brennkraftmaschine nach wenigstens einem der vorangegangenen Ansprüche, **dadurch gekennzeichnet, dass** der wenigstens eine durch die Steuer- oder Regeleinrichtung (2) beinflussbare Verbrennungsparameter einen Ladedruck (p₂') umfasst.

9. Brennkraftmaschine nach dem vorangegangenen Anspruch, **dadurch gekennzeichnet, dass** durch die Steuer- oder Regeleinrichtung bei Beeinflussung des Ladedruckes (p₂') ein entsprechendes Verbrennungsluftverhältnis (λ) durch
- Einstellen einer Einspritzmenge eines Treibstoffes in den wenigstens einen Brennraum (3) und/oder
- Einstellen eines Mischverhältnisses des Treibstoff-Luft-Gemisches steuert oder regelt.

10. Brennkraftmaschine nach wenigstens einem der vorangegangenen Ansprüche, **dadurch gekennzeichnet, dass** der wenigstens eine durch die Steuer- oder Regeleinrichtung (2) beinflussbare Verbrennungsparameter einen Zündzeitpunkt umfasst.

11. Brennkraftmaschine nach wenigstens einem der vorangegangenen Ansprüche, **dadurch gekennzeichnet, dass** die Steuer- oder Regeleinrichtung (2) dazu ausgebildet ist, den wenigstens einen Verbrennungsparameter beeinflussenden Aktuator (4) anzusteuern, um eine Veränderung eines Füllgrades des wenigstens einen Brennraumes (3), vorzugsweise mittels Verstellung wenigstens eines variablen Ventiltriebes (7), vorzunehmen.

12. Brennkraftmaschine nach wenigstens einem der vorangegangenen Ansprüche, **dadurch gekennzeichnet, dass** der wenigstens eine Verbrennungsparameter beeinflussenden Aktuator (4) als Drosselklappe (8) ausgebildet ist.

13. Brennkraftmaschine nach wenigstens einem der vorangegangenen Ansprüche, **dadurch gekennzeichnet, dass** die Steuer- oder Regeleinrichtung (2) dazu ausgebildet ist, den wenigstens einen Verbrennungsparameter beeinflussenden Aktuator (4) anzusteuern, um eine Einstellung einer dem wenigstens einen Brennraum (3) zugeführten Treibstoffmenge und/oder eines Einspritzzeitpunktes eines dem wenigstens einen Brennraum (3) zugeführten Treibstoffes, vorzugsweise mittels Ansteuerung wenigstens eines Port-Injection-Ventiles (9), vorzunehmen.

14. Brennkraftmaschine nach wenigstens einem der vorangegangenen Ansprüche, **dadurch gekennzeichnet, dass** die Steuer- oder Regeleinrichtung (2) dazu ausgebildet ist, den wenigstens einen Verbrennungsparameter beeinflussenden Aktuator (4) anzusteuern, um eine Einstellung eines Ladedruckes (p₂'), vorzugsweise mittels Verstellung eines Umgehungsventiles (10) für einen Verdichter (11) und/oder einer wenigstens einem Verdichter (11) zugehörigen variablen Verdichtergeometrie, vorzunehmen.

15. Brennkraftmaschine nach wenigstens einem der vorangegangenen Ansprüche, **dadurch gekennzeichnet, dass** die Steuer- oder Regeleinrichtung (2) zur Ermittlung einer Veränderung eines auf den wenigstens einen Brennraum (3) wirkenden Abgasgegendruckes (p₃') eine Verstellung wenigstens eines auf den wenigstens einen Brennraum (3) wirkenden Abgasgegendruck (p₃') beeinflussenden Aktuators (5) berücksichtigt.

16. Brennkraftmaschine nach Anspruch 15, **dadurch gekennzeichnet, dass** der auf den wenigstens einen Brennraum (3) wirkende Abgasgegendruck (p₃') beeinflussende Aktuator (5) ein Umgehungsventil (12) für eine Abgasturbine (13) eines Turboladers (14) umfasst.

17. Brennkraftmaschine nach Anspruch 15 oder 16, **dadurch gekennzeichnet, dass** der auf den wenigstens einen Brennraum (3) wirkende Abgasgegendruck (ps`) beeinflussende Aktuator (5) eine einer Abgasturbine (13) zugehörige variable Turbinengeometrie umfasst.

18. Brennkraftmaschine nach wenigstens einem der Ansprüche 15 bis 17, **dadurch gekennzeichnet, dass** der auf den wenigstens einen Brennraum (3) wirkende Abgasgegendruck (p₃') beeinflussende Aktuator ein Umgehungsventil (15) für einen vor einer Abgasturbine (13) eines Turboladers (14) angeordneten Katalysator (16) umfasst.

19. Brennkraftmaschine nach wenigstens einem der vorangegangenen Ansprüche, **dadurch gekennzeichnet, dass** die Steuer- oder Regeleinrichtung (2) zur Ermittlung einer Veränderung eines auf den wenigstens einen Brennraum (3) wirkenden Abgasgegendruckes (p₃') eine Veränderung eines durch wenigstens einen Sensor erfassten Messsignales in einer Abgasleitung der Brennkraftmaschine (1) berücksichtigt.

20. Verfahren zum Regeln oder Steuern einer Brennkraftmaschine (1), wobei in wenigstens einem Brennraum (3) der Brennkraftmaschine (1) ein Treibstoff-Luft-Gemisch mit wenigstens einem beeinflussbaren Verbrennungsparameter verbrannt wird, wobei der wenigstens eine Verbrennungsparameter im Rahmen eines Emissionsregelkreises als Ersatzgröße für NOₓ-Emission über einen funktionalen Zusammenhang durch wenigstens einen den wenigstens einen Verbrennungsparameter beeinflussenden Aktuator (4) so gesteuert oder geregelt wird, dass für jede Soll-Leistung oder Ist-Leistung der Brennkraftmaschine (1) wenigstens ein Verbrennungsparameter eingestellt wird, **dadurch gekennzeichnet, dass** der funktionale Zusammenhang den Ladedruck (p₂') auf Basis eines gewünschten Wertes der Leistung (P_{mech}), der NOx-Emissionen und eines Abgasgegendruckes (p₃') bestimmt, wobei durch den funktionalen Zusammenhang ein Einfluss einer Veränderung des auf den wenigstens einen Brennraum (3) wirkenden Abgasgegendruckes (p₃') berücksichtigt wird.

## Claims

1. Internal combustion engine with an open-loop or closed-loop control device (2), wherein at least one combustion chamber (3) of the internal combustion engine (1) is formed to burn a fuel-air mixture with at least one combustion parameter that can be influenced by the open-loop or closed-loop control device (2), wherein the open-loop or closed-loop control device (2) has an emission control circuit, which is formed to control, via a functional relationship, the at least one combustion parameter as a substitute variable for the NOₓ emission through at least one actuator (4) that influences the at least one combustion parameter such that at least one combustion parameter can be set for each target power or actual power of the internal combustion engine (1), **characterized in that** the functional relationship determines the boost pressure (p₂') on the basis of a desired value of the power (P_{mech}), the NOx emissions and an exhaust back pressure (p₃') and is stored in the open-loop or closed-loop control device (2), whereby the functional relationship takes into account an influence of a change in the exhaust back pressure (p₃') acting on the at least one combustion chamber (3).

2. Internal combustion engine according to the preceding claim, **characterized in that** the open-loop or closed-loop control device (2) is formed, in the case of an adjustment of a bypass valve (12) of an exhaust turbine (13), to effect a change in the bypass valve (10) of a compressor (11) such that the NOx emissions are kept constant.

3. Internal combustion engine according to one of the preceding claims, **characterized in that**, in the case of an increase in the exhaust back pressure (p₃'), the functional relationship takes this into account such that the emission control circuit sets a leaner fuel-air mixture compared with the previous operating point by changing the combustion parameter.

4. Internal combustion engine according to at least one of the preceding claims, **characterized in that**, in the case of an increase in the exhaust back pressure (p₃'), the functional relationship takes this into account such that the emission control circuit sets a later ignition time compared with the previous operating point by changing the combustion parameter.

5. Internal combustion engine according to at least one of the preceding claims, **characterized in that**, in the case of an increase in the exhaust back pressure (p₃'), the functional relationship takes this into account such that the emission control circuit sets a lower fill level of the at least one combustion chamber (3) compared with the previous operating point by changing the combustion parameter.

6. Internal combustion engine according to at least one of the preceding claims, **characterized in that** the at least one combustion parameter that can be influenced by the open-loop or closed-loop control device (2) comprises a combustion air ratio (λ) .

7. Internal combustion engine according to the preceding claim, **characterized in that** the open-loop or closed-loop control device influences the combustion air ratio (λ) that can be influenced by
- setting a boost pressure (p₂'),
- setting a quantity of a fuel injected into the at least one combustion chamber (3) and/or by
- setting a mixing ratio of the fuel-air mixture.

8. Internal combustion engine according to at least one of the preceding claims, **characterized in that** the at least one combustion parameter that can be influenced by the open-loop or closed-loop control device (2) comprises a boost pressure (p₂') .

9. Internal combustion engine according to the preceding claim, **characterized in that** the open-loop or closed-loop control device, when influencing the boost pressure (p₂'), controls or regulates a corresponding combustion air ratio (λ) by
- setting a quantity of a fuel injected into the at least one combustion chamber (3) and/or
- setting a mixing ratio of the fuel-air mixture.

10. Internal combustion engine according to at least one of the preceding claims, **characterized in that** the at least one combustion parameter that can be influenced by the open-loop or closed-loop control device (2) comprises an ignition time.

11. Internal combustion engine according to at least one of the preceding claims, **characterized in that** the open-loop or closed-loop control device (2) is formed to control the actuator (4) that influences at least one combustion parameter in order to make a change in a fill level of the at least one combustion chamber (3), preferably by means of adjusting at least one variable valve drive (7).

12. Internal combustion engine according to at least one of the preceding claims, **characterized in that** the actuator (4) that influences at least one combustion parameter is formed as a throttle valve (8).

13. Internal combustion engine according to at least one of the preceding claims, **characterized in that** the open-loop or closed-loop control device (2) is formed to control the actuator (4) that influences at least one combustion parameter in order to carry out a setting of a quantity of fuel fed into the at least one combustion chamber (3) and/or of an injection time of a fuel fed into the at least one combustion chamber (3), preferably by means of controlling at least one port injection valve (9).

14. Internal combustion engine according to at least one of the preceding claims, **characterized in that** the open-loop or closed-loop control device (2) is formed to control the actuator (4) that influences at least one combustion parameter in order to carry out a setting of a boost pressure (p₂'), preferably by means of adjusting a bypass valve (10) for a compressor (11) and/or a variable compressor geometry belonging to at least one compressor (11).

15. Internal combustion engine according to at least one of the preceding claims, **characterized in that** the open-loop or closed-loop control device (2), in order to ascertain a change in an exhaust back pressure (p₃') acting on the at least one combustion chamber (3), takes an adjustment of at least one actuator (5) that influences exhaust back pressure (p₃') acting on the at least one combustion chamber (3) into account.

16. Internal combustion engine according to claim 15, **characterized in that** the actuator (5) that influences exhaust back pressure (p₃') acting on the at least one combustion chamber (3) comprises a bypass valve (12) for an exhaust turbine (13) of a turbocharger (14).

17. Internal combustion engine according to claim 15 or 16, **characterized in that** the actuator (5) that influences exhaust back pressure (p₃') acting on the at least one combustion chamber (3) comprises a variable turbine geometry belonging to an exhaust turbine (13).

18. Internal combustion engine according to at least one of claims 15 to 17, **characterized in that** the actuator that influences exhaust back pressure (p₃') acting on the at least one combustion chamber (3) comprises a bypass valve (15) for a catalytic converter (16) arranged upstream of an exhaust turbine (13) of a turbocharger (14).

19. Internal combustion engine according to at least one of the preceding claims, **characterized in that** the open-loop or closed-loop control device (2) takes a change in a measurement signal detected by at least one sensor in an exhaust line of the internal combustion engine (1) into account in order to ascertain a change in an exhaust back pressure (p₃') acting on the at least one combustion chamber (3) .

20. Method for regulating or controlling an internal combustion engine (1), wherein in at least one combustion chamber (3) of the internal combustion engine (1) a fuel-air mixture is burned with at least one combustion parameter that can be influenced, wherein the at least one combustion parameter is controlled or regulated within the framework of an emission control circuit as a substitute variable for NOₓ emission via a functional relationship through at least one actuator (4) that influences the at least one combustion parameter such that at least one combustion parameter is set for each target power or actual power of the internal combustion engine (1), **characterized in that** the functional relationship determines the boost pressure (p₂') on the basis of a desired value of the power (P_{mech}), the NOx emissions and an exhaust back pressure (p₃'), wherein an influence of a change in the exhaust back pressure (p₃') acting on the at least one combustion chamber (3) is taken into account by the functional relationship.

## Revendications

1. Moteur à combustion interne avec un système de commande ou de régulation (2), dans lequel au moins une chambre de combustion (3) du moteur à combustion interne (1) est réalisée pour brûler un mélange air-carburant avec au moins un paramètre de combustion pouvant être influencé par le système de commande ou de régulation (2), dans lequel le système de commande ou de régulation (2) présente un circuit de régulation d'émission, qui est réalisé pour commander l'au moins un paramètre de combustion en tant que grandeur de remplacement pour l'émission de NOx à l'aide d'au moins un actionneur (4) influençant l'au moins un paramètre de combustion par l'intermédiaire d'une relation fonctionnelle, de sorte que pour chaque puissance de consigne ou puissance réelle du moteur à combustion interne (1) au moins un paramètre de combustion peut être ajusté, **caractérisé en ce que** la relation fonctionnelle définit la pression d'admission (p₂') sur la base d'une valeur souhaitée de la puissance (P_{mech}), des émissions de NOx et d'une contre-pression de gaz d'échappement (p₃') et est mise en mémoire dans le système de commande ou de régulation (2), ce qui a pour effet que la relation fonctionnelle prend en compte une influence d'une modification de la contre-pression de gaz d'échappement (p₃') agissant sur l'au moins une chambre de combustion (3).

2. Moteur à combustion interne selon la revendication précédente, **caractérisé en ce que** le dispositif de commande et de régulation (2) est réalisé pour mettre en œuvre une modification de la soupape de dérivation (10) d'un compresseur (11) lors d'un réglage d'une soupape de dérivation (12) d'une turbine à gaz d'échappement (13), de telle sorte que les émissions des NOx sont maintenues constantes.

3. Moteur à combustion interne selon l'une quelconque des revendications précédentes, **caractérisé en ce que** lors d'une augmentation de la contre-pression de gaz d'échappement (p₃'), la prise en compte de la relation fonctionnelle s'effectue de sorte que le circuit de régulation d'émission règle un mélange air-carburant plus pauvre par rapport au point de fonctionnement précédent par modification du paramètre de combustion.

4. Moteur à combustion interne selon au moins l'une des revendications précédentes, **caractérisé en ce que** lors d'une augmentation de la contre-pression de gaz d'échappement (p₃'), la prise en compte de la relation fonctionnelle s'effectue de sorte que le circuit de régulation d'émission règle un moment d'allumage postérieur par rapport au point de fonctionnement précédent par modification du paramètre de combustion.

5. Moteur à combustion interne selon au moins l'une des revendications précédentes, **caractérisé en ce que** lors d'une augmentation de la contre-pression de gaz d'échappement (p₃'), la prise en compte de la relation fonctionnelle s'effectue de sorte que le circuit de régulation d'émission règle un degré de remplissage de l'au moins une chambre de combustion (3) plus faible par rapport au point de fonctionnement précédent par modification du paramètre de combustion.

6. Moteur à combustion interne selon au moins l'une des revendications précédentes, **caractérisé en ce que** l'au moins un paramètre de combustion pouvant être influencé par le système de commande ou de régulation (2) comprend un rapport d'air de combustion (λ).

7. Moteur à combustion interne selon la revendication précédente, **caractérisé en ce que** le système de commande ou de régulation influence le rapport d'air de combustion (λ) pouvant être influencé par
- ajustement d'une pression d'admission (p₂'),
- ajustement d'une quantité d'injection d'un carburant dans l'au moins une chambre de combustion (3) et/ou par
- ajustement d'un rapport de mélange du mélange air-carburant.

8. Moteur à combustion interne selon au moins l'une des revendications précédentes, **caractérisé en ce que** l'au moins un paramètre de combustion pouvant être influencé par le système de commande ou de régulation (2) comprend une pression d'admission (p₂').

9. Moteur à combustion interne selon la revendication précédente, **caractérisé en ce que** par le système de commande ou de régulation commande ou régule un rapport d'air de combustion (X) correspondant par
- ajustement d'une quantité d'injection d'un carburant dans l'au moins une chambre de combustion (3) et/ou
- ajustement d'un rapport de mélange du mélange air-carburant
lorsque la pression d'admission (p₂') est influencée.

10. Moteur à combustion interne selon au moins l'une des revendications précédentes, **caractérisé en ce que** l'au moins un paramètre de combustion pouvant être influencé par le système de commande ou de régulation (2) comprend un moment d'allumage.

11. Moteur à combustion interne selon au moins l'une des revendications précédentes, **caractérisé en ce que** le système de commande ou de régulation (2) est réalisé pour commander l'actionneur (4) influençant au moins un paramètre de combustion, pour effectuer une modification d'un degré de remplissage de l'au moins une chambre de combustion (3), de préférence au moyen du réglage d'au moins un mécanisme de distribution variable (7).

12. Moteur à combustion interne selon au moins l'une des revendications précédentes, **caractérisé en ce que** l'actionneur (4) influençant au moins un paramètre de combustion est réalisé en tant que papillon des gaz (8).

13. Moteur à combustion interne selon au moins l'une des revendications précédentes, **caractérisé en ce que** le système de commande ou de régulation (2) est réalisé pour commander l'actionneur (4) influençant au moins un paramètre de combustion, afin d'effectuer un ajustement d'une quantité de carburant amenée à l'au moins une chambre de combustion (3) et/ou d'un point d'injection d'un carburant amené à l'au moins une chambre de combustion (3), de préférence au moyen de la commande d'au moins une soupape d'injection par port (9).

14. Moteur à combustion interne selon au moins l'une des revendications précédentes, **caractérisé en ce que** le système de commande ou de régulation (2) est réalisé pour commander l'actionneur (4) influençant au moins un paramètre de combustion, afin d'effectuer un ajustement d'une pression d'admission (p₂'), de préférence au moyen du réglage d'une soupape de dérivation (10) pour un compresseur (11) et/ou d'une géométrie de compresseur variable associée à au moins un compresseur (11).

15. Moteur à combustion interne selon au moins l'une des revendications précédentes, **caractérisé en ce que** le système de commande ou de régulation (2) pour la détermination d'une modification d'une contre-pression de gaz d'échappement (p₃') agissant sur l'au moins une chambre de combustion (3) prend en compte un réglage d'au moins un actionneur (5) influençant la contre-pression de gaz d'échappement (p₃') agissant sur l'au moins une chambre de combustion (3).

16. Moteur à combustion interne selon la revendication 15, **caractérisé en ce que** l'actionneur (5) influençant une contre-pression de gaz d'échappement (p₃') agissant sur l'au moins une chambre de combustion (3) comprend une soupape de dérivation (12) pour une turbine à gaz d'échappement (13) d'un turbocompresseur (14).

17. Moteur à combustion interne selon la revendication 15 ou 16, **caractérisé en ce que** l'actionneur (5) influençant une contre-pression de gaz d'échappement (p₃') agissant sur l'au moins une chambre de combustion (3) comprend une géométrie variable associée à une turbine à gaz d'échappement (13).

18. Moteur à combustion interne selon au moins l'une des revendications 15 à 17, **caractérisé en ce que** l'actionneur influençant une contre-pression de gaz d'échappement (p₃') agissant sur l'au moins une chambre de combustion (3) comprend une soupape de dérivation (15) pour un catalyseur (16) disposé devant une turbine à gaz d'échappement (13) d'un turbocompresseur (14).

19. Moteur à combustion interne selon au moins l'une des revendications précédentes, **caractérisé en ce que** le système de commande ou de régulation (2) pour la détermination d'une modification d'une contre-pression de gaz d'échappement (p₃') agissant sur l'au moins une chambre de combustion (3) prend en compte une modification d'un signal de mesure détecté par au moins un capteur dans une conduite de gaz d'échappement du moteur à combustion interne (1).

20. Procédé pour la régulation ou commande d'un moteur à combustion interne (1), dans lequel un mélange air-carburant est brûlé dans au moins une chambre de combustion (3) du moteur à combustion interne (1) avec au moins un paramètre de combustion pouvant être influencé, dans lequel l'au moins un paramètre de combustion est commandé ou régulé par au moins un actionneur (4) influençant l'au moins un paramètre de combustion dans le cadre d'un circuit de régulation d'émission en tant que grandeur de remplacement pour l'émission de NOx par l'intermédiaire d'une relation fonctionnelle, de sorte que pour chaque puissance de consigne ou puissance réelle du moteur à combustion interne (1) au moins un paramètre de combustion est ajusté, **caractérisé en ce que** la relation fonctionnelle définit la pression d'admission (p₂') sur la base d'une valeur souhaitée de la puissance (P_{mech}), des émissions de NOx et d'une contre-pression de gaz d'échappement (p₃' ), dans lequel une influence d'une modification de la contre-pression de gaz d'échappement (p₃') agissant sur l'au moins une chambre de combustion (3) est prise en compte par la relation fonctionnelle.
